Europäisches Patentamt

European Patent Office

Office européen des brevets

(11) Veröffentlichungsnummer: **0 306 762**
**A1**

## (12) EUROPÄISCHE PATENTANMELDUNG

(21) Anmeldenummer: 88113663.4

(22) Anmeldetag: 23.08.88

(51) Int. Cl.⁴: **A47J 47/20 , E03C 1/18**

(30) Priorität: 08.09.87 DE 3730072

(43) Veröffentlichungstag der Anmeldung:
15.03.89 Patentblatt 89/11

(84) Benannte Vertragsstaaten:
AT BE CH DE ES FR GB GR IT LI LU NL SE

(71) Anmelder: **NIRO-PLAN AG**
**Baarerstr. 59**
**CH-6300 Zug(CH)**

(72) Erfinder: **Ris, Max**
**Schanzenweg 6**
**CH-4612 Wangen bei Olten(CH)**
Erfinder: **Monnard, André**
**Pestalozzistrasse 31**
**CH-4600 Olten(CH)**

(74) Vertreter: **Brommer, Hans Joachim, Dr.-Ing. et al**
**Patentanwälte Dipl.-Ing. R. Lemcke Dr.-Ing.**
**H.J. Brommer Bismarckstrasse 16 Postfach 4026**
**D-7500 Karlsruhe 1(DE)**

(54) Zubehör-Set für Küchenspülen.

(57) Die Erfindung betrifft ein aus einem Rüstbrett (1) und einem Siebbehälter (4) bestehendes Zubehör-Set. Dabei weist das Rüstbrett (1) einen Ausschnitt (3) auf, dessen Position und Kontur so bemessen ist, daß das Rüstbrett (1) und der Siebbehälter (4) gemeinsam und sich ergänzend in das Becken einer Spüle eingesetzt werden können.

Fig. 5

EP 0 306 762 A1

## Zubehör-Set für Küchenspülen

Die Erfindung betrifft ein Zubehör-Set für Küchenspülen, bestehend aus einem auf den Spülbeckenrand aufsetzbaren Rüstbrett und einem, insbesondere in ein kleineres Nebenbecken, wie Restbecken einsetzbaren Siebbehälter.

Um die Nutzungsmöglichkeiten von Küchenspülen zu erweitern, werden seit längerem Rüstbretter und Siebbehälter in den unterschiedlichsten Ausführungsformen angeboten.

Die Rüstbretter entsprechen in ihrer Kontur in etwa der des Spülbeckens und bei symmetrischen Spülen auch der des Tropfteiles, können also auf einen dieser beiden Spülenbereiche aufgelegt werden und stehen dann als plane Arbeitsfläche etwa zum Schneiden oder Putzen von Lebensmitteln zur Verfügung.

Die Siebbehälter sind in ihren Abmessungen auf die Kontur eines kleineren, zusätzlichen Beckens angepaßt, so daß sie in dieses Becken eingesetzt werden können. Sie fungieren hauptsächlich als Abtropfbecken oder zum Sammeln von Abfällen bei Putzarbeiten.

Von diesem Stand der Technik ausgehend, liegt der vorliegenden Erfindung die Aufgabe zugrunde, neue Anwendungsmöglichkeiten für das Rüstbrett und den Siebbehälter zu erschließen und damit auch den Gebrauchswert der dazugehörigen Spüle zu verbessern.

Diese Aufgabe wird erfindugsgemäß dadurch gelöst, daß das Rüstbrett an einem Teil seines Randes entsprechend der Kontur des Siebbehälters derart ausgeschnitten ist, daß beide Teile sich gegenseitig ergänzend gemeinsam auf den Spülbeckenrand bzw. in das Spülbecken einsetzbar sind.

Die Erfindung beruht also auf dem Gedanken, Rüstbrett und Siebbehälter, die bisher stets unabhängig voneinander benutzt worden sind, so aneinander anzupassen, daß sie gemeinsam in das Spülbecken eingesetzt werden können. Dadurch ergeben sich folgende Gebrauchsvorteile: Erstens können Abfälle beim Schneiden oder Putzen auf dem Rüstbrett leichter und direkter in den Siebbehälter geschoben werden als bei der bisher praktizierten räumlichen Trennung zwischen diesen beiden Zubehörteilen. Zweitens werden einfache Einbeckenspülen durch das erfindungsgemäße Zubehör nachträglich um die Funktion eines Grobausgusses, Abfallsammlers oder dergleichen aufgewertet und drittens steht selbst bei dem durch die Rüstplatte abgedeckten Spülbecken immer noch der kleine Siebbehälter zum Waschen oder dergleichen zur Verfügung. Im übrigen behalten beide Zubehörteile ihre bisherigen vorteilhaften Eigenschaften, da sie auch getrennt und unabhängig voneinander verwendet werden können.

In konstruktiver Ausbildung der vorliegenden Erfindung empfiehlt es sich, das Rüstbrett und den Siebbehälter hinsichtlich ihrer Konturen so zu gestalten, daß sie spaltfrei zusammenpassen. Ebenso empfiehlt es sich, daß beide Teile an ihrer Oberseite bündig aneinander anschließen, allenfalls kann das Rüstbrett ein etwas höheres Niveau als der obere Rand des Siebbehälters aufweisen, da dadurch das Abschieben von Abfällen und dergleichen in den Siebbehälter nicht behindert wird.

Damit das Rüstbrett und der Siebbehälter stabil im Bekken der Spüle gehalten werden, steht der Siebbehälter zweckmäßig an seinem oberen Rand kraft- oder formschlüssig mit dem ihm zugewandten Ausschnitt des Rüstbrettes in Eingriff. Dazu kann der Siebbehälter zwischen Ausschnitt und Beckenrand verklemmt werden. Es kommt je doch auch eine Rastverbindung zwischen Siebbehälter und Rüstbrett in Betracht.

Im allgemeinen weisen die Siebbehälter oben einen nach außen ragenden Rand auf, mit dem sie auf dem Rand des Restebeckens oder dergleichen aufliegen. In diesem Fall empfiehlt es sich, am Ausschnitt des Rüstbrettes eine Stufe oder Einsenkung vorzunehmen, damit der Rand des Siebbehälters in gleicher Weise zu dessen Halterung verwendet werden kann.

Diese Stufe liegt vorteilhaft in gleicher Höhe wie der Spülbeckenrand. Dadurch erhält der Siebbehälter in eingesetztem Zustand automatisch seine lotrechte Stellung, ohne daß am Siebbehälterrand besondere Vorkehrungen zu treffen sind.

Die beschriebene Erfindung ist bei jeder Spülbeckenkontur anwendbar, also sowohl an nahezu rechteckigen, runden und elliptischen Beckenformen. Wählt man eine Bekkenform, die an der einen Seitenwand, dort wo die Position des Siebbehälters vorgesehen ist, eine asymmetrische Querschnittserweiterung aufweist, so zeichnet sich die Spüle durch besonders kompakten Aufbau und harmonisches Aussehen aus.

Das erfindungsgemäße Zusammenwirken von Rüstbrett und Siebbehälter läßt sich selbstverständlich auch dann realisieren, wenn anstelle des Siebbehälters ein ge schlossener Behälter verwendet wird. Der Schutz der vorliegenden Erfindung soll sich daher auch hierauf beziehen.

Weitere Merkmale und Vorteile der Erfindung ergeben sich aus der nachfolgenden Beschreibung eines Ausführungsbeispieles anhand der Zeichnung; dabei zeigt

Figur 1 ein entsprechend der Kontur des Siebbehälters ausgeschnittenes Rüstbrett in der Draufsicht;

Figur 2 den dazu passenden Siebbehälter in der Draufsicht;

Figur 3 den gleichen Siebbehälter im Querschnitt;

Figur 4 die Draufsicht auf eine Einbauspüle und

Figur 5 die Draufsicht auf die gleiche Spüle bei eingesetztem Rüstbrett und Siebbehälter.

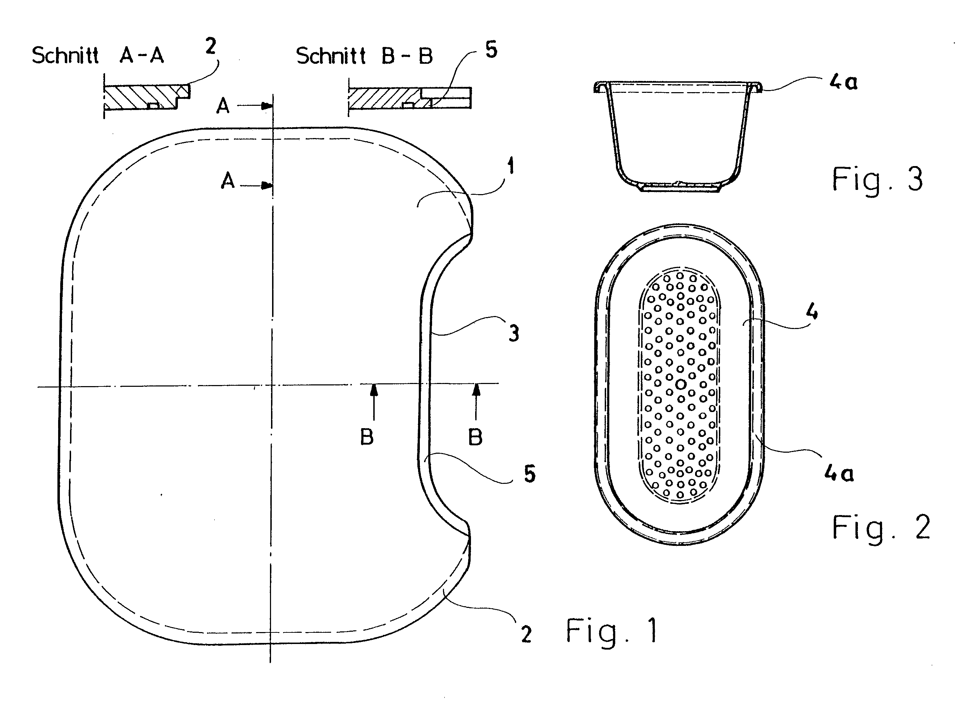

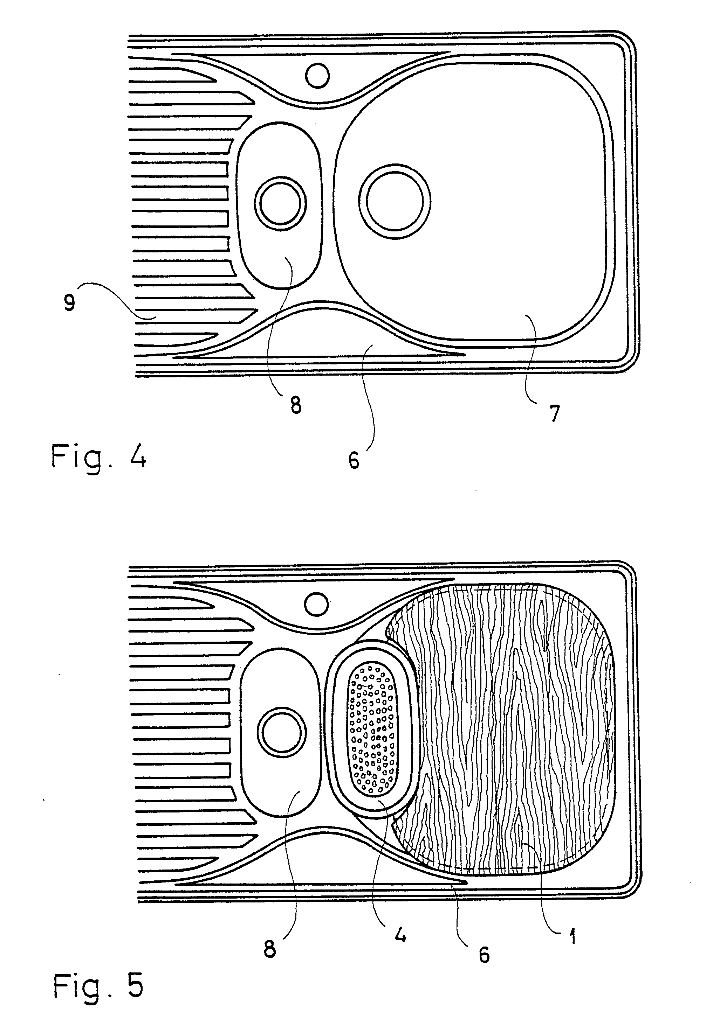

Das in Figur 1 dargestellte Rüstbrett 1 hat über den größeren Teil seines Umfanges die herkömmliche Form, es ist also insoweit an die Kontur des Spülbeckens (vergleiche Figur 4) angepaßt und mit einer umlaufenden Schulter 2 versehen, daß es in der üblichen Weise auf den oberen Beckenrand aufgelegt werden kann und von diesem getragen wird.

Wesentlich ist nun, daß das Rüstbrett 1 an einem Teil seines Umfanges - vorzugsweise an einer seiner Seitenkanten - einen Ausschnitt 3 aufweist. Dieser Ausschnitt ist zum einen an die Kontur eines Siebbehälters 4, vergl. Figur 2 und 3, angepaßt, zum anderen in seiner Position so weit in das Rüstbrett 1 hineingezogen, daß das Rüstbrett gemeinsam mit dem Siebbehälter 4 in das Spülbekken eingesetzt werden kann.

Während der Siebbehälter 4 absolut dem herkömmlichen Aufbau entsprechen kann, also oben mit einem nach außen ragenden und gegebenenfalls noch nach unten abgewinkelten Rand 4a versehen ist, müssen am Rüstbrett 1 im Bereich des Ausschnittes 3 Vorkehrungen getroffen werden, damit es dort zu einem Halt des Siebbehälters 4 kommt. Hierzu weist der Ausschnitt 3 eine unten vorspringende Stufe 5 auf - vergl. Schnitt B-B in Figur 1 -, auf welche der Rand 4a des Siebbehälters aufgelegt werden kann. Die Oberseite des Siebbehälters geht dann bündig in die Oberseite des Rüstbrettes über.

Auf der anderen Seite des Siebbehälters wird der überstehende Rand 4a auf den Beckenrand aufgelegt. Dadurch ist der Siebbehälter zusammen mit dem Rüstbrett sicher im Becken gelagert.

Die Figuren 4 und 5 zeigen die Anwendung des Rüstbrettes und des Siebbehälters bei einer Haushaltsspüle 6. Sie weist ein Hauptbecken 7, ein kleineres Nebenbecken 8 und ein nur teilweise dargestelltes Tropfteil 9 auf.

Für das Nebenbecken 8 wird üblicherweise der Siebbehälter 4 als Zubehörteil mitgeliefert. Erfindungsgemäß kann nun dieser Siebbehälter nicht nur im Nebenbecken 8, sondern in Kombination mit dem Rüstbrett 1 auch im Hauptbecken 7 eingesetzt werden.

Bei solchen Spülen, die über kein Nebenbekken verfügen, bietet die erfindungsgemäße Kombination den Vorteil, daß die Spüle nachträglich für den Einsatz eines Siebbehälters geeignet wird.

**Ansprüche**

1. Zubehör-Set für Küchenspülen, bestehend aus einem auf den Spülbeckenrand aufsetzbaren Rüstbrett und einem, insbesondere in ein kleineres Nebenbecken, wie Restebecken,einsetzbaren Siebbehälter,
dadurch gekennzeichnet,
daß das Rüstbrett (1) an einem Teil seines Randes entsprechend der Kontur des Siebbehälters (4) derart ausgeschnitten ist, daß beide Teile (1, 4) sich gegenseitig ergänzend gemeinsam auf den Spülbeckenrand bzw. in das Spülbecken (7) einsetzbar sind.

2. Zubehör-Set nach Anspruch 1, dadurch gekennzeichnet, daß das Rüstbrett (1) und der Siebbehälter (4) spaltfrei zusammenpassen.

3. Zubehör-Set nach Anspruch 1 oder 2, dadurch gekennzeichnet, daß das Rüstbrett (1) und der Siebbehälter (4) an ihrer Oberseite bündig aneinander anschließen.

4. Zubehör-Set nach einem der vorhergehenden Ansprüche, dadurch gekennzeichnet, daß der Siebbehälter (4) an seinem oberen Rand kraft- oder formschlüssig mit dem Ausschnitt (3) des Rüstbrettes (1) in Eingriff steht.

5. Zubehör-Set nach einem der vorhergehenden Ansprüche, wobei der Siebbehälter oben einen nach außen ragenden Rand aufweist, dadurch gekennzeichnet, daß am Ausschnitt (3) des Rüstbrettes (1) eine Stufe (5) zum Einlegen des Randes (4a) des Siebbehälters (4) angeordnet ist.

6. Zubehör-Set nach Anspruch 5, dadurch gekennzeichnet, daß diese Stufe (5) in gleicher Höhe wie der Spülbeckenrand liegt.

7. Rüstbrett für das Zubehör-Set gemäß einem der vorhergehenden Ansprüche.

8. Siebbehälter für das Zubehör-Set gemäß einem der Ansprüche 1 bis 6.

9. Spüle für das Zubehör-Set gemäß einem der vorhergehenden Ansprüche, dadurch gekennzeichnet, daß sie eine asymmetrische Querschnittserweiterung an einer Becken wand aufweist.

10. Zubehör-Set nach einem der vorhergehenden Ansprüche, gekennzeichnet durch einen ungelochten Beckeneinsatz anstelle des Siebbehälters (4).

Fig. 3

Fig. 2

Fig. 1

Schnitt A - A

Schnitt B - B

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 041 964  (SHAMOON)<br>* Insgesamt *<br>--- | 1-4,7 | A 47 J  47/20<br>E 03 C   1/18 |
| Y | FR-A-2 326 900  (ATAG)<br>* Insgesamt *<br>--- | 1-4,7 | |
| A,P | DE-A-3 621 151  (LALAPE)<br>* Figur 4b *<br>--- | 5,6 | |
| A | DE-A-2 417 917  (MALLINSON)<br>* Insgesamt *<br>--- | 1-4 | |
| A | DE-A-3 342 744  (MÜSER)<br>--- | | |
| A | DE-A-2 559 619  (FRANKE)<br>----- | | |

**RECHERCHIERTE SACHGEBIETE (Int. Cl.4)**

E 03 C
A 47 J

Der vorliegende Recherchenbericht wurde für alle Patentansprüche erstellt

| Recherchenort | Abschlußdatum der Recherche | Prüfer |
|---|---|---|
| DEN HAAG | 22-11-1988 | HANNAART J.P. |